# FASCICULE DE BREVET EUROPEEN

(11) **EP 4 392 203 B1**
(45) Date de publication et mention de la délivrance du brevet: **18.11.2026**
(21) Numéro de dépôt: 22790353.1
(22) Date de dépôt: 18.08.2022
(51) Int. Cl.: B23Q 17/09

(54) **SYSTÈME THERMOCOUPLE OUTIL-REVÊTEMENT**
THERMOELEMENTSYSTEM MIT WERKZEUGBESCHICHTUNG
TOOL-COATING THERMOCOUPLE SYSTEM

(30) Priorité: 01.10.2021 CH 0703412021
(43) Date de publication de la demande: 03.07.2024
(73) Titulaire: Association Suisse Pour la Recherche Horlogère, 2002 Neuchâtel (CH)
(72) Inventeur: VALLAT, Evelyne, 2054 Chézard-St-Martin (CH); MARI, Daniele, 1030 Bussigny (CH)
(74) Mandataire: P&TS SA (AG, Ltd.)
(86) Numéro de dépôt international: PCT/IB2022/057752
(87) Numéro de publication internationale: WO 2023/052863

(56) Documents cités:
- WO-A1-90/05607
- WO-A1-95/32409
- BOBZIN K ET AL: "Smart PVD hard coatings with temperature sensor function", SURFACE AND COATINGS TECHNOLOGY, ELSEVIER, NL, vol. 423, 19 August 2021 (2021-08-19), XP086790133, ISSN: 0257-8972, [retrieved on 20210819], DOI: 10.1016/J.SURFCOAT.2021.127631

## Description

### Domaine technique

La présente invention concerne un outil d'usinage, tel qu'un outil de coupe, permettant de déterminer in situ et en temps réel la température de l'arête de coupe et par conséquent la qualité de l'usinage et/ou de l'outil d'usinage et son état d'usure. En particulier, la présente invention décrit un outil d'usinage comprenant un matériau de cœur et un matériau de revêtement localement en contact l'un avec l'autre et sinon isolés électriquement l'un de l'autre. Au cours d'un échauffement local de l'outil, par exemple au cours de l'usinage, les différences de pouvoir thermoélectrique entre le matériau de cœur et le matériau de revêtement génèrent des différences de potentiel qui sont collectées et analysées. Ces données permettent le suivi en temps réel de la température de la zone sollicitée thermiquement sur l'outil et par conséquent de la qualité de l'usinage et/ou de l'outil d'usinage et son état d'usure. La présente invention décrit également une méthode d'usinage basée sur un tel outil et permettant d'améliorer la reproductibilité et/ou la qualité de l'usinage.

### Etat de la technique

Les opérations d'usinage, mettant en contact un ou plusieurs outils d'usinage et une pièce à usiner, génèrent une augmentation de température par friction. Les variations de températures dépendent en partie du degré de frottement entre l'outil et la pièce à usiner, et donnent de ce fait des informations sur les conditions d'usinage et la qualité de l'outil d'usinage, notamment son affutage. La mesure directe de la température sur l'outil d'usinage à proximité de la zone d'usinage reste actuellement difficile, voire impossible.

Le thermocouple peut être cité parmi les moyens de déterminer la température d'une pièce. Les dispositifs thermocouples reposent sur l'effet Seebeck, qui est déterminé par la différence de pouvoir thermoélectrique des deux matériaux en contact intime formant la jonction thermocouple. Les dispositifs comprennent deux conducteurs électriques différents, par exemple à base de chromel et d'alumel, disposés entre une zone de mesure où la température doit être déterminée et une zone de référence dont la température sert de référence. Les deux conducteurs sont reliés l'un à l'autre au niveau de la zone de mesure. La différence de température entre les zones de mesure et de référence génère une différence de potentiel représentative de la différence de température. Le coefficient Seebeck permet d'établir la relation entre les différences de potentiels mesurées et la température en fonction du pouvoir thermoélectrique des matériaux conducteurs utilisés. Les thermocouples sont usuellement utilisés comme dispositifs externes pour mesurer la température des objets ou de leurs surfaces. La zone de mesure, où sont joints les conducteurs, est mise en contact avec la zone dont la température doit être déterminée.

La détermination de la température d'un outil d'usinage par un thermocouple externe est trop imprécise pour permettre un suivi de la qualité d'usinage. Elle est en outre difficile à mettre en œuvre du fait de l'encombrement du dispositif à proximité de la zone d'usinage.

Des méthodes connues de mesure de la température lors de l'usinage reposent sur le contact entre l'outil et la pièce à usiner. Cependant, ces méthodes de mesure dépendent du matériau constituant la pièce en usinage et ne sont donc pas toujours fiables. Elles sont en outre limitées le plus souvent à l'usinage de certaines pièces et ne peuvent être généralisées.

Il convient donc d'améliorer les outils et les méthodes existantes de sorte à permettre une mesure fiable et reproductible des températures générées in-situ par l'usinage.

Le document WO9532409 décrit un film thermosensible permettant de déterminer in situ la température d'outils de coupe à des fins de contrôle des conditions d'usinage par ordinateur. Le film thermosensible comprend une couche métallique conductrice séparée du corps de l'outil par une couche isolante faite d'alumine, à l'exception de points de contact faisant office de jonctions thermocouples.

La référence Bobzin et. al., "Smart PVD hard coating with temperature sensor function", 19 août 2021, décrit des revêtements durs thermosensibles pour des outils de coupe.

Le document WO9005607 décrit un outil à couper équipé d'un détecteur d'état de l'outil, comprend des détecteurs de température et des conducteurs placés sur l'outil.

### Bref résumé de l'invention

Un but de la présente invention est de proposer un outil d'usinage, et/ou un set d'outils d'usinage, permettant une mesure fiable de la température et de ses variations à proximité de la zone d'usinage.

Un autre but de la présente invention est de proposer un outil d'usinage, et/ou un set d'outils d'usinage, permettant une mesure de la température à proximité de la zone d'usinage indépendamment du matériau de la pièce usinée.

Un autre but de la présente invention est de proposer un outil d'usinage et/ou un set d'outils d'usinage compacts, comprenant un moyen de mesure de la température intégré.

Un autre but de l'invention est de proposer une méthode d'usinage (non revendiquée) intégrant une étape de contrôle in situ et en temps réel des conditions d'usinage. En l'occurrence, il s'agit d'améliorer la reproductibilité et la qualité de l'usinage.

Un autre but de la présente invention est de proposer une méthode de gestion (non revendiquée) d'un ou plusieurs outils d'usinage, au moins partiellement automatisée.

Selon l'invention, ces buts sont atteints notamment au moyen de l'outil objet des revendications indépendantes et détaillés dans les revendications qui en dépendent.

Cette solution présente notamment l'avantage par rapport à l'art antérieur d'améliorer le contrôle in situ des conditions d'usinage et la reproductibilité des opérations d'usinage. Elle permet en outre d'assurer la gestion des outils d'usinage de manière automatisée et efficace.

### Brève description des figures

Des exemples de mise en œuvre de l'invention sont indiqués dans la description illustrée par les figures suivantes :
Figure 1 : représentation schématique d'un thermocouple selon l'art antérieur.
Figure 2 : représentation schématique d'un outil selon un exemple de la présente invention.
Figure 3 : représentation schématique d'une opération d'usinage impliquant l'outil de la présente description.

### Exemple(s) de mode de réalisation de l'invention

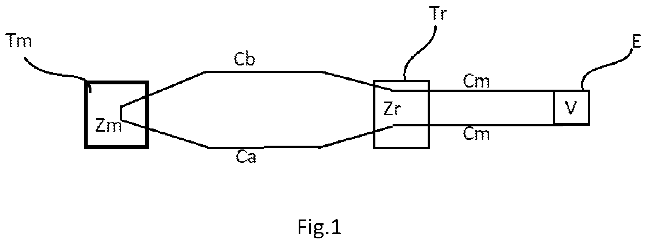

La figure 1 représente schématiquement la mesure d'une température **Tm** d'une zone de mesure **Zm** par thermocouple. Le dispositif comporte un premier conducteur électrique **Ca** et un second conducteur électrique **Cb,** en contact l'un de l'autre au niveau de la zone de mesure **Zm.** Les premier **Ca** et second **Cb** conducteurs électriques sont de nature thermoélectrique différente. Ils sont tous deux en contact d'une zone de référence **Zr** distante de la zone de mesure **Zm.** La zone de référence **Zr** est à une température de référence **Tr,** pouvant être par exemple la température ambiante. La différence de potentiel des premier **Ca** et second **Cb** conducteurs, résultant de leur différences de propriétés thermoélectriques, est déterminée par un conducteur de mesure **Cm** au niveau de la zone de référence **Zr** par un dispositif **E** adapté à une telle mesure. La valeur mesurée peut ensuite faire l'objet d'un traitement adéquat pour déduire de la différence de potentiel mesurée la température **Tm** de la zone de mesure **Zm.** Parmi les paramètres utilisés pour le traitement des mesures, le coefficient de Seebeck relatif aux premier **Ca** et second **Cb** conducteurs est généralement considéré.

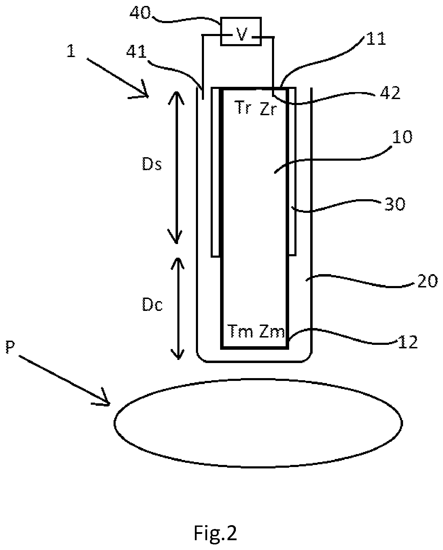

Un exemple d'outil d'usinage **1** selon la présente description est représenté à la figure 2. Il comporte une partie interne **10** constituant son âme, et un revêtement **20** lui conférant les propriétés physiques et mécaniques adéquates à l'usinage des pièces **P.** L'âme de l'outil d'usinage **1** peut être par exemple en alliage de carbure de tungstène (WC) et d'un liant métallique (Co) dans des proportions variables. Il peut alternativement être en acier rapide ou en d'autres alliages métalliques. La partie interne **10** de l'outil **1** peut comporter d'autres éléments. Il est entendu que la composition exacte de la partie interne **10** de l'outil d'usinage **1** n'est pas limitative. Il suffit qu'elle soit électriquement conductive pour les besoins de la présente invention. Tout outil à base de métal ou d'alliages métalliques, ou comprenant suffisamment de matériaux électriquement conducteurs, peut donc être mis en œuvre dans le cadre de la présente invention. Il est également entendu que la partie interne **10** peut être constituées de plusieurs zones ou couches différentes, pour autant qu'une d'entre elles au moins soit électriquement conductive.

Le revêtement **20** recouvre au moins une partie de la surface de la partie interne **10** de l'outil **1.** Le revêtement **20** confère à l'outil d'usinage **1** les propriétés de dureté et de résistance nécessaires à l'usinage. Un tel revêtement peut être par exemple à base de nitrure de titane (TiN), à base de nitrure d'aluminium et de chrome (AlCrN), de nitrure d'aluminium et de titane (TiAlN) et tout autre élément propre à conférer les propriétés adéquates à l'outil. Le revêtement **20** peut résulter de divers procédés de dépôts tels que des dépôts en phase vapeur. Par exemple, un procédé PVD ou d'autres procédés équivalents peuvent être mis en œuvre. L'épaisseur du revêtement **20** est typiquement comprise entre quelques dizaines de nanomètres et quelques micromètres. Elle peut être par exemple de l'ordre de 0,3 à 10 µm, ou de l'ordre de 1 à 5 µm. Des procédés de dépôts électrochimiques ou d'autres procédés comme le CVD peuvent également être mis en œuvre. La nature du revêtement et le procédé utilisé ne sont pas limitatifs, pour autant que le revêtement **20** soit électriquement conducteur et adapté à générer un potentiel électrique sous l'effet d'une différence de température.

Le terme « outils d'usinage » **1** désigne tout outil destiné à modifier une pièce **P** à usiner par contact mécanique avec la pièce **P.** Il inclut les fraises, les forêts de perçage, les outils de ponçage, les outils de coupe, les poinçons et tout autre outil utilisé dans des opérations de découpe, de polissage, d'affutage, de poinçonnage, de tournage et de perçage. L'outil comporte à cet effet une zone de friction avec la pièce **P,** source d'une variation de température à la fois de l'outil et de la pièce **P.** La zone de friction est conçue pour être plus dure que la pièce à usiner. L'outil d'usinage exclut donc tout outil non directement en contact avec les pièces **P** à usiner.

La partie interne **10** et le revêtement **20** de l'outil d'usinage **1** ont tous deux des propriétés de conducteur électrique et thermique caractérisées par leur pouvoir thermoélectrique. Les matériaux utilisés pour la partie interne **10** et le revêtement **20** sont choisis de sorte à ce que leurs propriétés conductrices électriques et/ou thermiques diffèrent. De la sorte, une différence de potentiel peut être générée sur la base d'une différence de température.

L'outil d'usinage selon la présente invention comporte une partie proximale **12** et une partie distale **11.** La partie proximale désigne la partie en contact avec la pièce **P** à usiner, laquelle comporte le tranchant de l'outil ou l'arête de coupe, le cas échéant. La partie proximale **12** s'étend sur une distance **Dc** pouvant correspondre par exemple à la profondeur de coupe le cas échéant ou à une distance de friction du copeau sur l'outil. La distance **Dc** est typiquement comprise entre 5 µm et 20 mm, ou encore entre 50 µm et 20 mm, ou encore entre 0,2 et 20 mm, de l'ordre de 1 à 15 mm ou de 3 à 10 mm par exemple, selon l'outil considéré. La partie proximale **12** correspond à la zone de mesure **Zm** de la température à déterminer **Tm,** étant au plus près du contact de l'outil **1** avec la pièce **P.** La longueur de la partie proximale **12** peut varier en fonction des caractéristiques de la mesure recherchée, relatives par exemple à la sensibilité ou au temps de réponse. La partie proximale **12** correspond à la portion de l'outil dépourvue d'isolant **30,** décrite plus loin.

La partie distale **11** est une partie éloignée de la partie proximale **12,** pouvant correspondre par exemple à la partie de l'outil servant à le maintenir sur un porte outil. Etant éloignée de la pièce **P,** sa température lors d'une opération d'usinage est inférieure à celle de la zone de mesure **Zm** de la partie proximale **12.** En fonction de la longueur de l'outil et de la conductivité thermique de ses matériaux, la température de l'outil au niveau de sa partie distale **11** peut correspondre à la température ambiante, ou à une température intermédiaire entre la température ambiante et la température mesurée **Tm** au niveau de la partie proximale **12.** La température de la partie distale **11,** ou d'une portion de la partie distale **11** peut servir de température de référence **Tr.** La température de référence est déterminée dans une zone de référence **Zr** de la partie distale **12** de l'outil 1. De préférence, la zone de référence **Zr** est disposée à l'extrémité de la partie distale **11** la plus éloignée de la partie proximale **12.** La partie distale **11** s'étend par exemple sur une longueur **Ds** pouvant correspondre à la partie de l'outil maintenue par son support. La distance **Ds** est typiquement de quelques centimètres, soit de l'ordre de 1 mm à 20 cm, ou de 1 à 20 cm, , selon l'outil considéré, en particulier aux outils de micro usinage. La longueur de la partie distale **11** est de préférence très largement supérieure à celle de la partie proximale **12.** Il importe en effet que les zones de mesure **Zm** et de référence **Zr** soient le plus éloignées possible. La longueur **Ds** de la partie distale **11** peut par exemple être 3, 4, 5 ou 10 fois supérieure à la longueur **Dc** de la partie proximale **12.** En d'autres termes, les zones de mesure **Zm** et de référence **Zr** sont de préférence séparées par une distance supérieure à environ 3 cm, ou 5 cm ou 10 cm, soit comprise entre 4 et 20 cm environ. Il est entendu que la partie distale **11** correspond à la partie revêtue de l'isolant **30,** décrit plus bas. La couche d'isolant **30,** si elle est suffisamment mince, soit inférieure à environ 5 microns, ou environ 3 microns, voire inférieure à 1 micron, peut s'étendre jusqu'à une distance du bord de l'outil, dans la partie proximale **12,** inférieure à 2 mm ou 1 mm, voire moins, sans affecter l'angle de coupe.

Dans la partie proximale **12** de l'outil 1, les matériaux constituant la partie interne **10** et le revêtement **20** de l'outil 1 sont en contact direct de sorte à établir un contact électrique.

Le revêtement **20** s'étend au moins jusqu'à la zone de référence Zr disposée dans la partie distale **11** de l'outil **1.**

L'outil d'usinage **1** selon la présente description comporte en outre un isolant électrique **30** disposé entre la partie interne **10** et le revêtement **20** de l'outil **1,** au niveau de sa partie distale **11.** De la sorte, les matériaux de la partie interne **10** et du revêtement **20** sont électriquement isolés les uns des autres dans les zones de l'outil autres que la zone de mesure **Zm.** L'isolant électrique **30** est typiquement une couche d'une épaisseur comprise entre 100 et 900 nm, de l'ordre de 200 à 500 nm par exemple. Le matériau isolant peut être sélectionné parmi les matériaux usuels tels que le carbure de silicium (SiC), l'alumine (Al₂O₃), la silice (SiO₂) des oxydes de titane (TiO₂) ou de zinc (ZnO) ou tout autre isolant électrique adéquat, ainsi que leurs mélanges. L'isolant électrique **30** peut être déposé à la surface de la partie interne **10** de l'outil par tout procédé adapté, tel qu'un dépôt en phase vapeur. De tels procédés incluent le procédé PVD ainsi que d'autres procédés équivalents.

L'outil d'usinage **1** comporte ainsi un premier conducteur électrique correspondant à sa partie interne **10** et un second conducteur électrique correspondant à son revêtement **20,** les premier et second conducteurs électriques étant en contact électrique l'un avec l'autre au niveau de la partie proximale **12** de l'outil **1,** en contact avec la pièce **P** à usiner, et électriquement isolés l'un de l'autre dans sa partie distale **11.** Les premier et second conducteurs électriques ont des propriétés thermoélectriques différentes l'un de l'autre.

L'outil d'usinage est connecté électriquement à un dispositif de mesure **40,** permettant de déterminer la différence de potentiel **V** entre la partie interne **10** et le revêtement **20** de l'outil **1.** La différence de potentiel **V** est de préférence déterminée au niveau de la zone de référence **Zr,** dans la partie distale **11** de l'outil **1.** A cet effet, la partie interne **10** comporte un premier moyen de connexion électrique 41 et le revêtement **20** comporte un second moyen de connexion électrique 42 permettant de connecter le dispositif de mesure **40.** La différence de potentiel mesurée dans la zone de référence **Zr,** à une température de référence **Tr,** dépend de la différence de température entre la température mesurée **Tm** dans la zone de mesure **Zm** et la température de référence **Tr.**

Le dispositif de mesure **40** comprend un ou plusieurs moyens de calculs, ou est connecté à un ou plusieurs moyens de calculs permettant de déduire de la différence de potentiel **V** mesurée, la température mesurée **Tm** au niveau de la zone de mesure **Zm.** De tels moyens de calculs incluent tout dispositif électronique usuel tel que processeur, microprocesseur, interagissant éventuellement avec une ou plusieurs mémoires où sont stockées des paramètres de calculs. Les paramètres considérés incluent par exemple les coefficients de Seebeck correspondant aux matériaux de la partie interne **10** et du revêtement **20** de l'outil **1.** Les coefficients de Seebeck peuvent être déterminés séparément par mesure ou par calculs sur la base de tests préalables. Ils peuvent alternativement être entrés dans une mémoire, avec éventuellement d'autres données, aux fins de traitement des mesures. La température de référence **Tr** de la zone de référence **Zr** peut faire partie des paramètres utilisés dans le traitement des mesures. D'autres paramètres utiles peuvent être considérés.

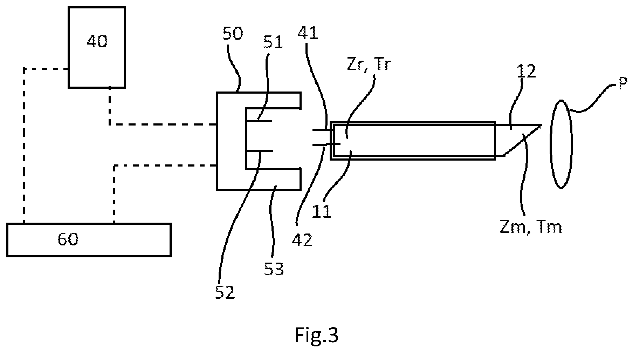

Selon un mode de réalisation, détaillé à la figure 3, les moyens de connexion **41** et **42** mentionnés plus haut permettent à l'outil d'usinage **1** de se connecter électriquement à un support **50** faisant office de porte outil. Le support **50** comporte à cet effet un moyen de fixation **53,** permettant de maintenir l'outil d'usinage en position. Le support **50** peut comporter en outre des moyens de connexion électriques **51, 52** adaptés à recevoir les moyens de connexion **41, 42** de l'outil d'usinage **1.** Le support **50** peut être connecté à un dispositif de mesure **40** comme décrit ci-dessus. Le moyen de mesure **40** peut être par exemple intégré à une machine-outil sur laquelle est fixé le présent outil d'usinage **1** via le support **50.** Ainsi, l'outil d'usinage **1** peut être automatiquement connecté à un moyen de mesure **40** dès lors qu'il est monté sur son support **50.** Des mesures de température in-situ et en temps réel peuvent être effectuées.

Selon une disposition particulière, la partie distale **11** de l'outil, ou le support **50** en contact avec la partie distale **11** est thermostaté, de sorte que la zone de référence **Zr** reste à une température de référence **Tr** prédéterminée et contrôlée. Alternativement, la température de référence **Tr** fait l'objet d'une mesure indépendante régulière de sorte à assurer la fiabilité de la mesure de température **Tm** au niveau de la zone de mesure **Zm.**

Selon une disposition particulière, l'outil **1** peut comporter un dispositif d'identification, tel qu'une puce RFID ou tout autre moyen de reconnaissance et/ou d'identification de l'outil. Le moyen d'identification stocke les données relatives au suivi de l'outil, telles que le nombre d'usinages opérés, les données relatives aux opérations d'affutage ou de contrôle, les données relatives aux températures mesurées **Tm** dans la zone de mesure **Zm,** ainsi que toute autre donnée jugée pertinente.

Le dispositif de mesure **40,** ou le support **50** le cas échéant, peuvent être connectés à une unité de contrôle **60** permettant de suivre la qualité de l'usinage et/ou de l'outil d'usinage **1.** Par exemple, l'unité de contrôle **60** peut être adaptée pour émettre un signal d'alarme lorsque la température mesurée **Tm** dépasse un certain seuil prédéterminé **S1** ou si elle dépasse in certain seuil prédéterminé **S1** pendant une durée limite **Q1** prédéterminée. Alternativement ou en plus, l'unité de contrôle **60** peut être adaptée à initier un changement d'outil lorsque l'outil utilisé est jugé de mauvaise qualité. Le remplacement de l'outil peut être automatique, notamment lorsque le support **50** est adapté à prendre et à laisser un outil d'usinage de manière autonome. Dans le cas contraire un changement manuel peut être initié suite aux mesures effectuées. L'outil remplacé peut être sujet à rectification ou bien définitivement jeté. L'unité de contrôle **60** peut en outre modifier les paramètres d'usinage en fonction de la température mesurée **Tm.** Par exemple, la vitesse d'usinage peut être adaptée en fonction de la température mesurée en temps réel. Dans le cas où la zone de référence est thermostatée, l'unité de contrôle **60** peut être adaptée à contrôler les paramètres pour maintenir la température de référence **Tr** à une valeur prédéterminée ou dans une plage de valeurs prédéterminées. La zone de référence **Zr** peut par exemple être thermostatée par la circulation d'un fluide caloporteur ou par tout autre moyen adéquat. Alternativement, l'unité de contrôle **60** peut être adaptée pour mesurer la température de référence **Tr** par un moyen adéquat, à intervalles régulier et pour adapter les paramètres de traitement des mesures en conséquence, si besoin. D'autres opérations utiles peuvent être initiées sur cette base en fonction des besoins.

L'unité de contrôle **60** peut être intégrée à la machine-outil ou bien être installée à proximité, ou encore à distance. Elle peut être connectée au dispositif de mesure **40** par une connexion filaire ou bien par une connexion sans fil.

Le dispositif de mesure **40,** et/ou l'unité de contrôle **60** peuvent comporter, ou être connectées à, un moyen d'amplification du signal. La différence de potentiel entre le revêtement **20** et la partie interne **10** de l'outil **1** peut ainsi être amplifiée jusqu'à atteindre une valeur d'au moins **1** mV, ou d'au moins 3 mV ou être comprise dans une plage de **2** à **10** mV. D'autres valeurs peuvent être considérées en fonction des besoins. Par exemple, une variation de température de 50°C à 100°C peut donner lieu à un signal de l'ordre de 1 à 15 mV, ou de l'ordre de 4 à 10 mV.

La présente invention couvre en outre un set de plusieurs outils d'usinage **1** tels que décrit ici. Les outils d'un set peuvent être identiques ou différents. Chacun des outils du set comporte les moyens de mesure de température intégrés tels que décrit ici, ce qui permet de mesurer la température de chacun des outils de manière reproductible. Le suivi de l'outil peut être individualisé ou bien relatif à l'ensemble des outils du set.

La présente descritption se rapporte également à un procédé de fabrication d'un outil d'usinage **1** tel que décrit plus haut. Le procédé de fabrication comprend en l'occurrence une étape de déposer sur la partie distale **11** d'un outil d'usinage une couche d'isolant **30.** Une étape préalable de masquage de la partie proximale **12** peut être prévue. Le dépôt de l'isolant **30** peut s'effectuer par PVD, CVD ou par un autre moyen de dépôt en phase vapeur selon les matériaux utilisés. Une fois le dépôt effectué avec l'épaisseur requise, le masque protégeant la partie proximale est retiré, le cas échéant. Il s'ensuit une étape de dépôt du revêtement **20** à la fois sur la partie proximale **12** et sur la partie distale **11** de l'outil d'usinage **1.** Le dépôt de revêtement **20** peut être effectué par un procédé PVD ou tout autre procédé adapté, selon les matériaux utilisés.

La présente description couvre également un procédé d'usinage d'une pièce **P** au moyen d'un outil **1** tel que décrit ici. Le procédé comporte une étape de fixation de l'outil **1** sur un support **50** adapté. L'outil peut être ainsi automatiquement connecté à un dispositif de mesure **40** via le support **50.** Dans le cas contraire, une étape distincte de connexion de l'outil **1** à un dispositif de mesure **40** peut être prévue. Le procédé d'usinage peut comporter une étape de calibration, permettant par exemple de déterminer la température de référence **Tr** avant usinage. L'étape de calibration peut le cas échéant permettre de vérifier que la zone de mesure **Zm** et la zone de référence **Zr** sont toutes deux à la même température avant usinage. Le procédé inclut une étape d'usinage, nécessitant la mise en mouvement de l'un ou l'autre de l'outil **1** et de la pièce **P,** ou des deux, et le contact de la partie proximale **12** de l'outil **1** avec la pièce **P,** conduisant à une augmentation de la température au niveau de la zone de mesure **Zm.** Le procédé comporte une étape de détermination de la température **Tm** mesurée au niveau de la partie proximale **12** comme indiqué plus haut. La température peut être mesurée à intervalles réguliers prédéterminés. Alternativement, elle peut être mesurée en continu. La mesure de la température peut comprendre la détermination de la température effective et/ou la variation de la température, y compris la vitesse de variation de la température. Le procédé d'usinage comprend une étape d'analyse des températures mesurées. L'analyse des températures pendant l'opération d'usinage peut être effectuée de manière automatique au moyen de l'unité de contrôle **60** mentionnée plus haut. Elle est de préférence faite en temps réel, c'est-à-dire pendant l'opération d'usinage. Cela n'exclut pas qu'une partie du traitement des données soit effectuée après l'opération d'usinage. L'analyse des températures comprend l'une ou plusieurs des étapes consistant à :
- comparer les températures mesurées avec une ou plusieurs valeurs seuil préétablies,
- établir un profil de température correspondant à l'opération d'usinage,
- enregistrer les données relatives à une ou plusieurs des étapes précitées,
- consolider les données enregistrées de sorte à établir des valeurs moyennes ou des profils types,
- déterminer une éventuelle dérive des paramètres et/ou profils établis d'une opération d'usinage à l'autre.

Le procédé d'usinage selon la présente description comporte une étape de validation et/ou de rejet de l'opération d'usinage ou de la pièce **P** usinée, en fonction des données déterminées lors de l'opération d'usinage. En particulier, dans le cas où l'une ou plusieurs de la température mesurée **Tm,** de sa variation, ou de la vitesse de sa variation diverge de valeurs préétablies, ou de valeurs moyennes consolidées ou de profils types, la pièce usinée **P** peut être orientée vers un contrôle additionnel effectué par d'autres méthodes après usinage. Elle peut alternativement être rejetée sans contrôle additionnel. Alternativement ou en plus, les opérations d'usinage peuvent être automatiquement stoppées jusqu'à ce que les paramètres d'usinage acceptables soient rétablis. Les paramètres d'usinage incluent l'utilisation d'un outil **1** ayant des performances acceptables. Dans le cas contraire, l'outil **1** peut être changé et/ou rectifié.

Les données stockées peuvent faire l'objet d'une consultation ultérieure et/ou d'un retraitement post-usinage.

Un procédé de gestion d'un ou plusieurs outils, non revendiqué, est décrit ici. Le procédé de gestion peut comprendre en particulier une étape d'identifier l'outil **1** faisant l'objet du suivi. L'outil **1** peut être identifié de manière automatique ou manuelle, par exemple au moyen d'une puce RFID ou par tout autre moyen adéquat. Le procédé comporte une étape de mesure de la température **Tm** lors des différentes opérations d'usinage effectué par l'outil objet du suivi. Les mesures successives sont stockées dans une base de données de sorte à pouvoir être comparées les unes aux autres. Les profils de températures successivement enregistrés peuvent faire l'objet d'une comparaison et/ou d'une analyse.

Le procédé de gestion de l'outil comporte une étape de détermination d'une dérive de son profil de température pour une opération d'usinage donnée. Lorsque la dérive dépasse un seuil prédéterminé, relatif à l'un ou plusieurs paramètres tels que la température mesurée, la variation de température et la vitesse de variation de température, un premier message d'alerte peut être émis. Le premier message d'alerte peut être relatif à un premier degré d'usure de l'outil. Alternativement ou en plus, un second message d'alerte peut être émis lors du passage d'un second seuil prédéterminé. Le second message d'alerte peut par exemple inciter à rectifier l'outil **1.**

Selon un mode de réalisation, le procédé de gestion d'un outil permet de qualifier les défauts de l'outil en fonction de ses profils de température. Les défauts peuvent se limiter à l'émoussage dû à ses utilisations répétées. Les défauts peuvent alternativement être relatifs à une délamination du revêtement, une fracture du bord de coupe de l'outil **1,** soit dans sa partie interne **10,** soit au niveau de son revêtement, une dégradation de sa dureté suite à d'éventuelles surchauffes. Chaque défaut peut être identifié par un profil de température spécifique, identifié et/ou élaboré par le procédé de gestion de l'outil. Les bases de données comportant un grand nombre de profils de températures peuvent par exemple être exploitées pour identifier et caractériser le défaut de l'outil. Un programme d'intelligence artificielle et/ou de deep learning ou tout autre programme pouvant être entraîné, peut être utilisé dans l'exploitation et la constitution des données. En fonction du type de défaut identifié, l'outil **1** peut être orienté vers une rectification ou vers un remplacement définitif, ou vers un recyclage, ou vers tout autre opération jugée pertinente.

Selon un mode de réalisation, l'outil selon la présente description peut comporter plus d'une zone de référence **Zr.** Les différentes zones de référence **Zr** peuvent être mise à la même température de référence **Tr.** Alternativement, les différentes zones de référence **Zr** peuvent avoir des températures différentes, de sorte à permettre d'accroitre la fiabilité des mesures. Dans ce cas, la différence de potentiel est déterminée au niveau de chacune des différentes zones de référence **Zr.** L'outil selon la présente description peut alternativement ou en plus comporter plus d'une zone de mesure **Zm.** Cela permet en l'occurrence de déterminer les variations de température à plusieurs endroits différents au niveau de la zone d'usinage.

### Numéros de référence employés sur les figures

- 1: Outils d'usinage
- 10: Partie interne
- 11: Partie distale
- 12: Partie proximale
- 20: Revêtement
- 30: Isolant
- 40: Dispositif de mesure
- 41, 42: Moyens de connexion
- 50: Porte-outil
- 51, 52: Moyens de connexion
- 53: Moyen de fixation
- 60: Unité de contrôle
- Ds: Longueur de la partie distale
- Dc: Longueur de la partie proximale
- P: Pièce en usinage
- Tm: Température mesurée
- Zm: Zone de mesure
- Tr: Température de référence
- Zr: Zone de référence
- V: Différence de potentiel

## Revendications

1. Outil d'usinage (1) comprenant une partie interne (10) ayant une partie proximale (12), destinée à être en contact avec une pièce (P) à usiner, et une partie distale (11),
un revêtement (20) recouvre la partie interne (10), y compris la partie proximale (12), le revêtement (20) conférant à l'outil (1) les propriétés nécessaires à l'usinage,
la partie interne (10) et le revêtement (20) étant en contact direct sur la partie proximale (12) de l'outil (1),
**caractérisé en ce que**
la partie interne (10) correspond à un premier conducteur électrique, le revêtement (20) correspond à un second conducteur électrique, les premier et second conducteurs électriques étant en contact électrique l'un avec l'autre au niveau de la partie proximale (12) et ayant des propriétés thermoélectriques différentes; et
**en ce que** l'outil d'usinage comprend en outre un isolant électrique (30) isolant électriquement la partie interne (10) du revêtement (20) sur la partie distale (11) de l'outil (1).

2. Outil selon la revendication 1 dans lequel la partie proximale (12), détermine une zone de mesure (Zm) et où la partie distale (11), ou une portion de la partie distale, détermine une zone de référence (Zr), la zone de mesure (Zm) ayant une température mesurée (Tm) et la zone de référence (Zr) ayant une température de référence (Tr) différente de la température mesurée (Tm) lors de l'usinage d'une pièce (P).

3. Outil selon l'une des revendications 1 et 2, comprenant en outre un dispositif de mesure (40) adapté à la mesure d'une différence de potentiel (V) entre la partie interne (10) et le revêtement (20) au niveau de la zone de mesure (Zm).

4. Outil selon l'une des revendications 1 à 3, la partie interne (10) comprenant un ou plusieurs des matériaux sélectionnés parmi l'acier et le carbure de tungstène, le revêtement (20) comprenant un ou plusieurs des matériaux sélectionnés parmi le nitrure de titane (TiN), le nitrure d'aluminium et de chrome (AlCrN), et le nitrure d'aluminium et de titane (TiAlN), et l'isolant (30) comprenant un ou plusieurs des matériaux sélectionnés parmi le carbure de silicium (SiC), l'alumine (Al₂O₃), la silice (SiO₂) et des oxydes de titane (TiO₂) ou de zinc (ZnO) et les oxides mixtes comme le SiAlON.

5. Outil selon l'une des revendications 1 à 4, la partie interne (10) étant à base d'un mélange de carbure de tungstène et d'un liant métallique, le revêtement (20) étant une couche de nitrure d'aluminium et de titane (TiAlN) d'une épaisseur comprise entre 300 nm et 2µm, et l'isolant (30) étant une couche de TiO₂ ou de ZnO d'une épaisseur comprise entre 100 et 800 nm.

6. Outil selon l'une des revendications 1 à 5, comprenant un premier moyen de connexion électrique (41), disposé dans le revêtement (20) et un second moyen de connexion électrique (42) disposé dans la partie interne (10) de l'outil, étant adaptés à la connexion d'un dispositif de mesure (40) de la différence de potentiel.

7. Machine-outil comprenant l'outil selon l'une des revendications 1 à 6, ledit outil étant fixé à ladite machine-outil par un support (50), ladite machine-outil comprenant ou étant connectée à une unité de contrôle (60) programmée pour suivre en temps réel les variations de température (Tm) mesurées au niveau de la zone de mesure (Zm).

## Patentansprüche

1. Bearbeitungswerkzeug (1), umfassend einen inneren Teil (10), der einen proximalen Teil (12), der dazu bestimmt ist, mit einem zu bearbeitenden Werkstück (P) in Kontakt zu sein, und einen distalen Teil (11) aufweist,
wobei eine Beschichtung (20) den inneren Teil (10) einschließlich des proximalen Teils (12) bedeckt, wobei die Beschichtung (20) dem Werkzeug (1) die zur Bearbeitung erforderlichen Eigenschaften verleiht, wobei der innere Teil (10) und die Beschichtung (20) an dem proximalen Teil (12) des Werkzeugs (1) in direktem Kontakt sind,
**dadurch gekennzeichnet, dass**
der innere Teil (10) einem ersten elektrischen Leiter entspricht, die Beschichtung (20) einem zweiten elektrischen Leiter entspricht, wobei der erste und der zweite elektrische Leiter an dem proximalen Teil (12) in elektrischem Kontakt miteinander stehen und unterschiedliche thermoelektrische Eigenschaften aufweisen; und
dass das Bearbeitungswerkzeug ferner einen elektrischen Isolator (30) umfasst, der den inneren Teil (10) an dem distalen Teil (11) des Werkzeugs (1) von der Beschichtung (20) elektrisch isoliert.

2. Werkzeug nach Anspruch 1, wobei der proximale Teil (12) einen Messbereich (Zm) bestimmt und wobei der distale Teil (11) oder ein Abschnitt des distalen Teils einen Referenzbereich (Zr) bestimmt, wobei der Messbereich (Zm) eine gemessene Temperatur (Tm) aufweist und wobei der Referenzbereich (Zr) eine Referenztemperatur (Tr) aufweist, die bei der Bearbeitung eines Werkstücks (P) verschieden von der gemessenen Temperatur (Tm) ist.

3. Werkzeug nach einem der Ansprüche 1 und 2, umfassend ferner eine Messvorrichtung (40), die zum Messen einer Potentialdifferenz (V) zwischen dem inneren Teil (10) und der Beschichtung (20) an dem Messbereich (Zm) geeignet ist.

4. Werkzeug nach einem der Ansprüche 1 bis 3, wobei der innere Teil (10) eines oder mehrere der Materialien umfasst, die aus Stahl und Wolframcarbid ausgewählt sind, wobei die Beschichtung (20) eines oder mehrere der Materialien umfasst, die aus Titannitrid (TiN), Aluminiumchromnitrid (AlCrN) und Titanaluminiumnitrid (TiAlN) ausgewählt sind, und wobei der Isolator (30) eines oder mehrere der Materialien umfasst, die aus Siliciumcarbid (SiC), Aluminiumoxid (Al₂O₃), Siliciumdioxid (SiO₂)und Titanoxiden (TiO₂) oder Zink (ZnO) und Mischoxiden wie SiAlON ausgewählt sind.

5. Werkzeug nach einem der Ansprüche 1 bis 4, wobei der innere Teil (10) auf einer Mischung aus Wolframcarbid und einem metallischen Bindemittel basiert, wobei die Beschichtung (20) eine Schicht aus Titanaluminiumnitrid (TiAlN) mit einer Dicke zwischen 300 nm und 2 µm ist und wobei der Isolator (30) eine Schicht aus TiO₂ oder ZnO mit einer Dicke zwischen 100 und 800 nm ist.

6. Werkzeug nach einem der Ansprüche 1 bis 5, umfassend ein erstes elektrisches Anschlussmittel (41), das in der Beschichtung (20) angeordnet ist, und ein zweites elektrisches Anschlussmittel (42), das in dem inneren Teil (10) des Werkzeugs angeordnet ist, wobei sie zum Anschließen einer Messvorrichtung (40) zum Messen der Potentialdifferenz geeignet sind.

7. Werkzeugmaschine, die das Werkzeug nach einem der Ansprüche 1 bis 6 umfasst, wobei das Werkzeug an der Werkzeugmaschine durch einen Halter (50) befestigt ist, wobei die Werkzeugmaschine eine Steuereinheit (60) umfasst oder daran angeschlossen ist, die dazu programmiert ist, die an dem Messbereich (Zm) gemessenen Temperaturänderungen (Tm) in Echtzeit zu überwachen.

## Claims

1. Machining tool (1) comprising an internal part (10) having a proximal part (12), intended to be in contact with a workpiece (P) to be machined, and a distal part (11),
wherein a coating (20) covers the internal part (10), including the proximal part (12), the coating (20) imparting to the tool (1) the properties necessary for machining;
wherein the internal part (10) and the coating (20) are in direct contact on the proximal part (12) of the tool (1),
**characterized in that**
the internal part (10) corresponds to a first electrical conductor, the coating (20) corresponds to a second electrical conductor, the first and second electrical conductors being in electrical contact with each other at the proximal part (12) and having different thermoelectric properties; and
**in that** the machining tool further comprises an electrical insulator (30) electrically insulating the internal part (10) from the coating (20) on the distal part (11) of the tool (1).

2. Tool according to claim 1,
wherein the proximal part (12) defines a measurement zone (Zm) and wherein the distal part (11), or a portion of the distal part, defines a reference zone (Zr), the measurement zone (Zm) having a measured temperature (Tm) and the reference zone (Zr) having a reference temperature (Tr) different from the measured temperature (Tm) during machining of a workpiece (P)

3. Tool according to one of claims 1 and 2,
further comprising a measuring device (40) adapted to measure a potential difference (V) between the internal part (10) and the coating (20) at the measurement zone (Zm).

4. Tool according to one of claims 1 to 3,
wherein the internal part (10) comprises one or more materials selected from steel and tungsten carbide, the coating (20) comprises one or more materials selected from titanium nitride (TiN), aluminium chromium nitride (AlCrN), and titanium aluminium nitride (TiAlN), and the electrical insulator (30) comprises one or more materials selected from silicon carbide (SiC), alumina (Al2O3), silica (SiO2), titanium oxides (TiO2) or zinc oxide (ZnO), and mixed oxides such as SiAlON.

5. Tool according to one of claims 1 to 4,
wherein the internal part (10) is based on a mixture of tungsten carbide and a metallic binder, the coating (20) is a layer of titanium aluminium nitride (TiAlN) with a thickness of between 300 nm and 2 µm, and the electrical insulator (30) is a layer of TiO2 or ZnO with a thickness of between 100 and 800 nm.

6. Tool according to one of claims 1 to 5,
comprising a first electrical connection means (41), arranged in the coating (20), and a second electrical connection means (42), arranged in the internal part (10) of the tool, adapted for connection of a measuring device (40) for the potential difference.

7. Machine tool comprising the tool according to one of claims 1 to 6, said tool being fixed to said machine tool by a holder (50), said machine tool comprising or being connected to a control unit (60) programmed to monitor in real time the temperature variations (Tm) measured at the measurement zone (Zm).
